Europäisches Patentamt

(19) European Patent Office

Office européen des brevets

(11) **EP 1 112 633 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.7: **H04J 13/00**, H04B 7/26, H04B 1/707

(21) Anmeldenummer: **99953692.3**

(22) Anmeldetag: **02.09.1999**

(86) Internationale Anmeldenummer:
**PCT/DE1999/002779**

(87) Internationale Veröffentlichungsnummer:
**WO 2000/014915 (16.03.2000 Gazette 2000/11)**

(54) **VERFAHREN ZUR BILDUNG BZW. ERMITTLUNG EINER SIGNALFOLGE, SENDEEINHEIT UND EMPFANGSEINHEIT**

METHOD FOR FORMING OR DETECTING A SIGNAL SEQUENCE AND TRANSMITTER UNIT AND RECEIVER UNIT

PROCEDE DE FORMATION OU DE DETERMINATION D'UNE SEQUENCE DE SIGNAUX, UNITE D'EMISSION ET UNITE DE RECEPTION

(84) Benannte Vertragsstaaten:
**DE ES FR GB IT**

(30) Priorität: **08.09.1998 DE 19840974**
**19.02.1999 DE 19907083**

(43) Veröffentlichungstag der Anmeldung:
**04.07.2001 Patentblatt 2001/27**

(73) Patentinhaber: **SIEMENS AKTIENGESELLSCHAFT**
**80333 München (DE)**

(72) Erfinder:
• **RAAF, Bernhard**
**D-81475 München (DE)**
• **MICHEL, Jürgen**
**D-80634 München (DE)**
• **LOBINGER, Andreas**
**D-83734 Hausham (DE)**
• **BÖMER, Leopold**
**San Diego, CA 92131 (US)**

(56) Entgegenhaltungen:
WO-A-96/39749      DE-C- 4 318 368
US-A- 5 559 829

• **MASKARA S L ET AL: "CONCATENATED SEQUENCES FOR SPREAD SPECTRUM SYSTEMS" IEEE TRANSACTIONS ON AEROSPACE AND ELECTRONIC SYSTEMS,US,IEEE INC. NEW YORK, Bd. AES-17, Nr. 3, Mai 1981 (1981-05), Seiten 342-350, XP000791008 ISSN: 0018-9251**
• **MILSTEIN L B: "Some statistical properties of combination sequences" IEEE TRANSACTIONS ON INFORMATION THEORY, MARCH 1977, USA, Bd. IT-23, Nr. 2, Seiten 254-258, XP000877014 ISSN: 0018-9448**
• **NN: "UMTS ; Physical Channel Structure" ETSI TR 101 397 ; UMTS 20.04 VERSION 3.0.1,Oktober 1998 (1998-10), Seiten 33-38, XP002131576 Nizza , FR**

EP 1 112 633 B1

**Beschreibung**

Die Erfindung betrifft ein Verfahren zur Synchronisation einer Basisstation mit einer Mobilstation.

Bei Signalübertragungssystemen, wie beispielsweise Mobilfunksystemen, ist es erforderlich, daß einer der Kommunikationspartner (erste Übertragungseinheit) bestimmte festgelegte Signale erkennt, die von einem anderen Kommunikationspartner (zweite Übertragungseinheit) ausgesandt werden. Dabei kann es sich beispielsweise um sogenannte Synchronisierungs-Bursts (Synchronisierungs-Funkblöcke) zur Synchronisierung zweier Synchronisationspartner, wie beispielsweise Funkstationen, oder um sogenannte Access-Bursts handeln.

Um derartige Empfangssignale gegenüber dem Umgebungsrauschen zuverlässig zu erfassen bzw. zu identifizieren, ist es bekannt, das Empfangssignal fortlaufend über eine festgelegte Zeitdauer mit einer vorgegebenen Signalfolge zu korrelieren und die Korrelationssumme über die Zeitdauer der vorgegebenen Signalfolge zu bilden. Der Bereich des Empfangssignals, der eine maximale Korrelationssumme ergibt, entspricht dem gesuchten Signal. Dem Synchronisationssignal von der Basisstation eines digitalen Mobilfunksystems ist beispielsweise eine Signalfolge als sogenannte Trainingssequenz vorgeschaltet, die auf die eben beschriebene Weise in der Mobilstation durch Korrelation mit der abgespeicherten Signalfolge erfaßt oder ermittelt wird. So können die Mobilstationen mit der Basisstation synchronisiert werden.

Auch in der Basisstation sind derartige Korrelationsberechnungen beispielsweise bei der Random-Access-Channel (RACH)-Detektion erforderlich. Außerdem wird eine Korrelationsberechnung auch zur Bestimmung der Kanalimpulsantwort und der Signallaufzeiten empfangener Signalbursts durchgeführt.

Die Korrelationssumme wird dabei wie folgt berechnet:

$$Sm = \sum_{i=0}^{n-1} E(i+m) * K(i)$$

wobei E(i) eine aus dem Empfangssignal abgeleitete Empfangssignalfolge und K(i) die vorgegebene Signalfolge ist, wobei i von 0 bis n-1 läuft. Die Korrelationssumme Sm wird aufeinanderfolgend für mehrere zeitlich versetzte, aus dem Empfangssignal gewonnene Signalfolgen E(i) berechnet, und dann der maximale Wert von Sm bestimmt. Sollen k aufeinanderfolgende Korrelationssummen berechnet werden, so beträgt der Berechnungsaufwand k * n Operationen, wobei eine Multiplikation und Addition zusammen als eine Operation gezählt wird.

Die Berechnung der Korrelationssummen ist daher sehr aufwendig und erfordert, insbesondere bei Real-Time-Anwendungen wie Sprachkommunikation oder Bildtelefonie oder in CDMA-Systemen, leistungsfähige und daher teure Prozessoren, die bei der Berechnung einen hohen Stromverbrauch aufweisen. Beispielsweise ist zur Synchronisation des sich in der Standardisierung befindlichen UMTS-Mobilfunksystems eine bekannte Signalfolge der Länge 256 Chips (bei CDMA wird ein übertragenes Bit auch Chip genannt) zu ermitteln. Die Folge wird alle 2560 Chips wiederholt. Da die Mobilstation anfangs asynchron zum Chiptakt arbeitet, muß das Empfangssignal überabgetastet werden, um auch bei ungünstiger Abtastlage noch ein ausreichendes Signal zu erhalten. Dies führt aufgrund der Abtastung der I-und Q-Komponente zu 256*2560*2*2 = 2621440 Operationen.

Aus dem Dokument Maskara S. L. et al;"Concatenated Sequences for Spread Spectrum Systems", IEEE Transactions on Aerospace and Electronic Systems, US, IEEE, Inc. New York, Bd.AES-17, Nr.3, Mai 1981 (1981-05) ist es bekannt eine äußere Signal-folge mit einer inneren Signalfolge zu modulieren, wodurch eine dritte Signalfolge entsteht.

Der Erfindung liegt nun die Aufgabe zugrunde, ein Verfahren zur Synchronisation zwischen einer Mobilstation und einer Basisstation, eine Basisstation und eine Mobilstation anzugeben, welche eine Synchronisation mit wenig Rechenaufwand ermöglichen.

Gelöst wird die Aufgabe durch die Merkmale der unabhängigen Ansprüche. Weiterbildungen sind den Unteransprüchen zu entnehmen.

Die Erfindung beruht demnach auf dem Gedanken, eine Signalfolge zur Synchronisation zu verwenden, die aus Signalteilfolgen dadurch erhältlich ist, daß eine zweite Signalteilfolge wiederholt wird und dabei durch eine erste Signalteilfolge moduliert wird, wobei die erste und zweite Signalteilfolge gleiche Länge aufweisen.

Durch Kenntnisse über die Signalteilfolgen in der Mobilstation kann die zur Synchronisation einer Mobilstation mit einer Basisstation erforderliche Berechnung von Korrelationssummen in der Mobilstation mit weniger Aufwand durchgeführt werden.

Zur Ermittlung einer in einer Empfangssignalfolge enthaltenen vorgegebenen Signalfolge mittels der Bestimmung von Korrelationssummen wird bei einer Weiterbildung der Erfindung eine Teilkorrelationssummenfolge der zweiten Signalteilfolge mit entsprechenden Teilen der Empfangssignalfolge berechnet. Zur Berechnung einer Korrelationssumme werden n1 Elemente der Teilkorrelationssummenfolge ausgewählt und im Sinne eines Skalarproduktes mit der ersten Signalteilfolge multipliziert.

Bei einer Weiterbildung der Erfindung werden einmal berechnete Teilkorrelationssummen abgespeichert und zur Berechnung weiterer Korrelationssummen verwendet.

So ist es möglich, bei der Berechnung weiterer Korrelationssummen vorher schon berechnete Teilkorrelationssummen zu verwenden und so den Rechenaufwand enorm zu verringern.

Unter Empfangssignalfolge versteht man auch eine Signalfolge, die beispielsweise durch eine Demodulation, Filterung, Derotation, Skalierung oder Analog-/Digitalwandlung aus einem empfangenen Signal abgeleitet wurde. Unter Ermittlung einer Signalfolge versteht man auch die Ermittlung der Position der Signalfolge innerhalb der Empfangssignalfolge.

Im folgenden wird die Erfindung anhand verschiedener Ausführungsbeispiele näher beschrieben, zu deren Erläuterung die nachfolgend aufgelisteten Figuren dienen:

Figur 1 schematische Darstellung eines Mobilfunknetzes

Figur 2 Blockschaltbild einer Funkstation

Figur 3 herkömmliches Verfahren zur Berechnung von Korrelationssummen

Figur 4 Darstellung erfindungsgemäßer Signalfolgen und Signalteilfolgen

Figur 5 schematische Darstellung der Bildung der erfindungsgemäßen Signalfolge

Figur 6,7 und 8 schematische Darstellung eines Verfahrens zur Berechnung einer Korrelationssumme

Figur 9 und 10 schematische Darstellung einer Ausführungsvariante eines Verfahrens zur Bildung der Korrelationssumme.

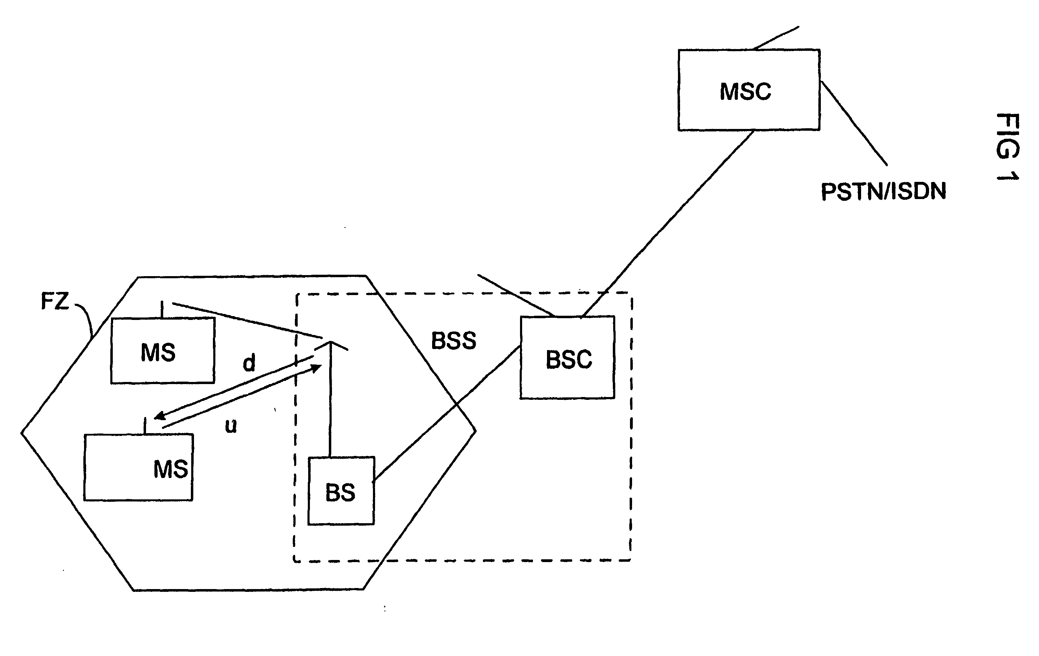

In Figur 1 ist ein zellulares-Mobilfunknetz, wie beispielsweise das GSM (Global System for Mobile Communication)-System dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroller BSC verbunden, der auch durch ein Datenverarbeitungssystem gebildet sein kann. Eine ähnliche Architektur findet sich auch in einem UMTS (Universal Mobile Telecommunication System).

Jeder Basisstationscontroller BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignalen Informationen innerhalb von Funkkanälen f die innerhalb von Frequenzbändern b liegen, übertragen werden. Die Reichweite der Funksignale einer Basisstation definieren im wesentlichen eine Funkzelle FZ.

Basisstationen BS und ein Basisstationscontroller BSC können zu einem Basisstationssystem BSS zusammengefaßt werden. Das Basisstationssystem BSS ist dabei auch für die Funkkanalverwaltung bzw. -zuteilung, die Datenratenanpassung, die Überwachung der Funkübertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie dem GSM-System, für den Uplink u (Mobilstation (Sendeeinheit) zur Basisstation (Empfangseinheit)) andere Frequenzbänder vorgesehen sein als für den Downlink d (Basisstation (Sendeeinheit) zur Mobilstation (Empfangseinheit)). Innerhalb der unterschiedlichen Frequenzbänder b können durch ein FDMA (Frequency Division Multiple Access) Verfahren mehrere Frequenzkanäle f realisiert werden.

Im Rahmen der vorliegenden Anmeldung versteht man unter Übertragungseinheit auch Kommunikationseinheit, Sendeeinheit, Empfangseinheit, Kommunikationsendgerät, Funkstation, Mobilstation oder Basisstation. Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme, wie CDMA-Systeme, insbesondere Wide-Band-CDMA-Systeme abgebildet werden.

Mittels Vielfachzugriffsverfahren können Daten über eine Funkschnittstelle effizient übertragen, separiert und einer oder mehreren bestimmten Verbindungen bzw. dem entsprechenden Teilnehmer zugeteilt werden. Dazu kann ein Zeitvielfachzugriff TDMA, ein Frequenzvielfachzugriff FDMA, ein Codevielfachzugriff CDMA oder eine Kombination aus mehreren dieser Vielfachzugriffsverfahren eingesetzt werden.

Beim FDMA wird das Frequenzband b in mehrere Frequenzkanäle f zerlegt; diese Frequenzkanäle werden durch den Zeitvielfachzugriff TDMA in Zeitschlitze ts aufgeteilt. Die innerhalb eines Zeitschlitzes ts und eines Frequenzkanals f übertragenen Signale können durch verbindungsindividuelle den Daten aufmodulierte Spreizcodes, sogenannte CDMA-Codes cc separiert werden.

Die so entstehenden physikalischen Kanäle werden nach einem festgelegten Schema logischen Kanälen zugeordnet. Bei den logischen Kanälen unterscheidet man grundsätzlich zwei Arten: Signalisierungskanäle (bzw. Steuerkanäle) zur Übertragung von Signalisierungsinformationen (bzw. Steuerinformationen) und Verkehrskanäle (Traffic Channel TCH) zur Übertragung von Nutzdaten.

Die Signalisierungskanäle werden weiter unterteilt in:

- Broadcast Channels
- Common Control Channels
- Dedicated/Access Control Channel DCCH/ACCH

Zu der Gruppe der Broadcast Channels gehören der Broadcast Control Channel BCCH, durch den die MS funktechnische Informationen vom Basisstationssystem BSS erhält, der Frequency Correction Channel FCCH und der Synchronization Channel SCH. Zu den Common Control Channels gehört der Random Access Channel RACH. Die zur Realisierung dieser logischen Kanäle übertragenen Funkblöcke oder Signalfolgen können dabei für unterschiedliche Zwecke Signalfolgen K(i) sog. Korrelationsfolgen enthalten, bzw. auf diesen logischen Kanälen können für unterschiedliche Zwecke Signalfolgen K(i) übertragen werden.

Im folgenden wird beispielhaft ein Verfahren zur Synchronisation einer Mobilstation MS mit einer Basisstation BS erläutert: Während eines ersten Schritts der anfänglichen Basisstationssuche oder Zellensuche (initial cell search procedure) verwendet die Mobilstation den primären Synchronisationskanal (primary synchronisation channel SCH (PSC)), um eine Zeitschlitzsynchronisation mit der stärksten Basisstation zu erreichen. Dies kann durch einen angepaßten Filter (matched filter) oder eine entsprechende Schaltung gewährleistet werden, der an den primären Synchronisationscode cp, der von allen Basisstationen ausgesendet wird, angepaßt ist. Dabei wird von allen Basisstationen BS der gleiche primäre Synchronisationscode cp der Länge 256 ausgesendet.

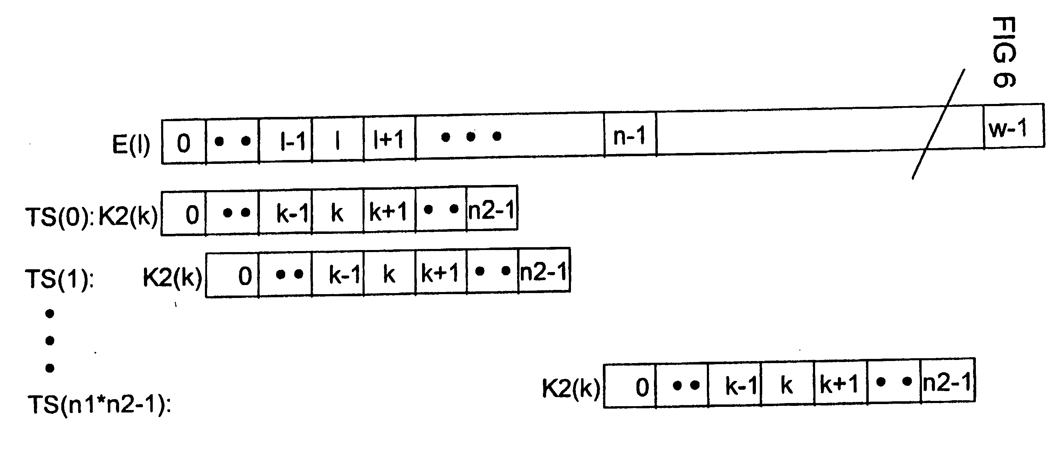

Die Mobilstation ermittelt mittels Korrelation aus einer Empfangsfolge die empfangenen Signalfolgen K(i) nach einem Prinzip, das in den Figuren 6 bis 11 und zugehöriger Beschreibung erläutert ist. Dabei werden am Ausgang eines angepaßten Filters (matched Filter) für jede empfangene Signalfolge jeder sich innerhalb des Empfangsbereichs der Mobilstation befindlichen Basisstation Peaks ausgegeben. Die Detektion der Position des stärksten Peaks ermöglicht die Ermittlung des Timings der stärksten Basisstation modulo der Schlitzlänge. Um eine größere Verläßlichkeit zu gewährleisten, kann der Ausgang des angepaßten Filters über die Anzahl der Zeitschlitze nicht-kohärent akkumuliert werden. Die Mobilstation führt also eine Korrelation über eine Signalfolge der Länge 256 Chips als Matched-Filter-Operation durch.

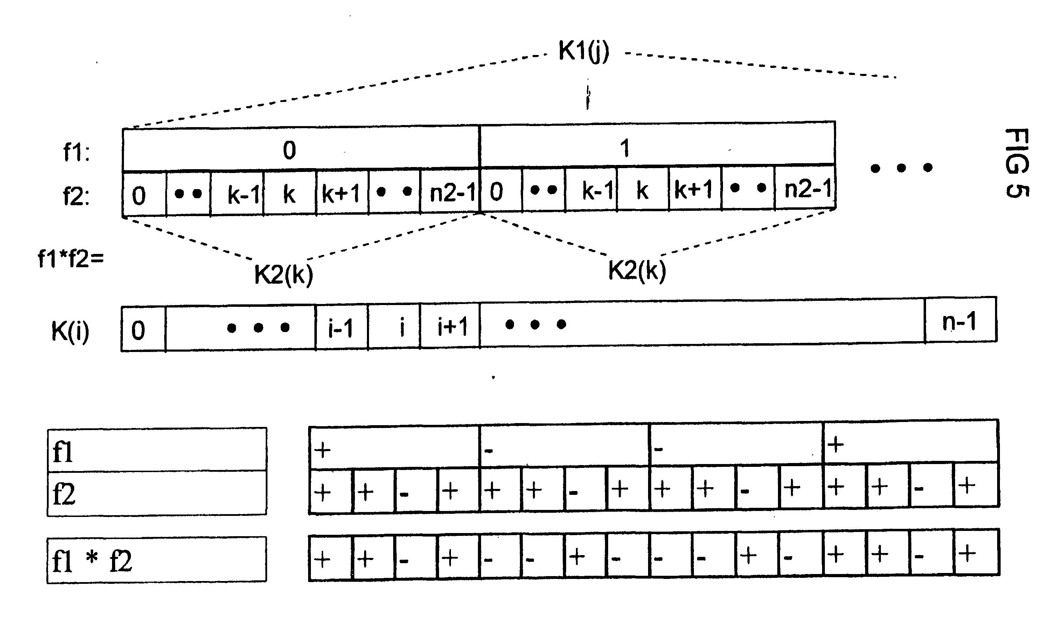

Der Synchronisationscode cp ist dabei entsprechend einer Signalfolge K(i) nach einem Prinzip, wie in Figur 5 und zugehöriger Beschreibung erläutert, gebildet oder kann derart gebildet sein oder ist derart erhältlich. Die Signalfolge K(i) bzw. der Synchronisationscode cp der Länge 256 ist dabei aus zwei Signalteilfolgen K1(j),K2(k), die jeweils die Länge 16 aufweisen, gebildet oder kann derart gebildet werden. Diese Signalteilfolgen bilden dabei ein Signalteilfolgenpaar (K1(j);K2(k)).

Eine derart erhältliche Signalfolge K(i) kann dabei auch "hierarchische Signalfolge" genannt werden. Eine Signalteilfolge kann auch "kurze Korrelationsfolge" genannt werden.

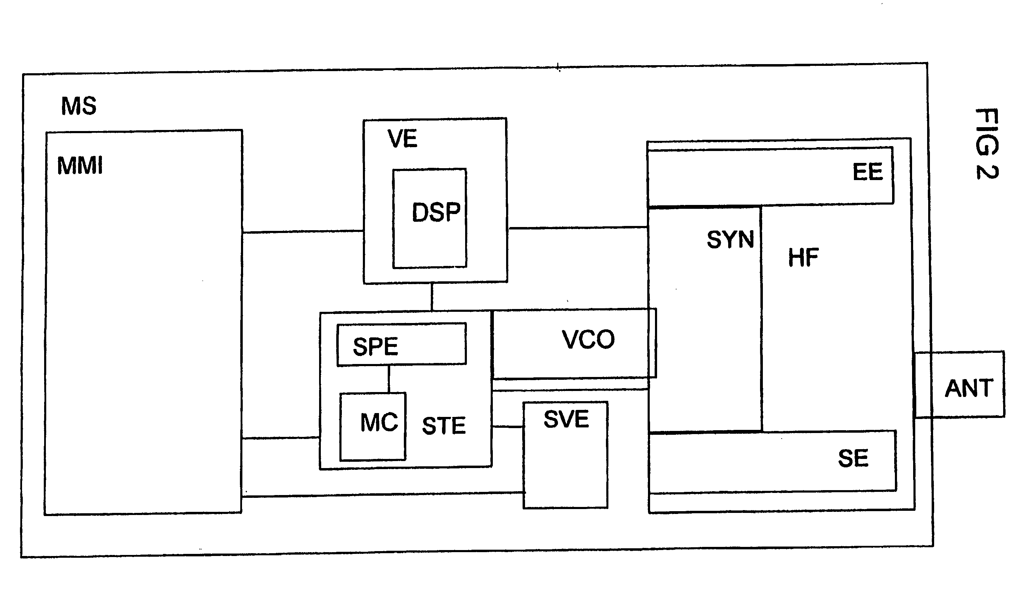

Figur 2 zeigt eine Funkstation, die eine Mobilstation MS sein kann, bestehend aus einer Bedieneinheit oder Interface-Einheit MMI, einer Steuereinrichtung STE, einer Verarbeitungseinrichtung VE, einer Stromversorgungseinrichtung SVE, einer Empfangseinrichtung EE und ggf. einer Sendeeinrichtung SE.

Die Steuereinrichtung STE besteht im wesentlichen aus einem programmgesteuerten Mikrocontroller MC, der schreibend und lesend auf Speicherbausteine SPE zugreifen kann. Der Mikrocontroller MC steuert und kontrolliert alle wesentlichen Elemente und Funktionen der Funkstation.

Die Verarbeitungseinrichtung VE kann auch durch einen digitalen Signalprozessor DSP gebildet sein, der ebenfalls auf Speicherbausteine SPE zugreifen kann. Durch die Verarbeitungseinrichtung VE können auch Additions- und Multiplikationsmittel realisiert sein.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden und während der Verarbeitung von Signalen entstehende Informationen gespeichert. Außerdem können darin Signalfolgen K(i), die zu Korrelationszwecken verwendet werden, und Zwischenergebnisse von Korrelationssummenberechnungen gespeichert werden. Die im Rahmen der Erfindung liegenden Signalfolgen K(i) können also in der Mobilstation und/oder der Basisstation abgespeichert sein.

Es ist auch möglich, daß ein oder mehrere Signalteilfolgen oder Signalteilfolgenpaare (K1(j);K2(k)) in der Mobilstation und/oder der Basisstation abgespeichert sind. Es ist auch möglich, daß in der Mobilstation und/oder der Basisstation eine Signalfolge K(i) aus einem Signalteilfolgenpaar (K1(j);K2(k)) gebildet wird.

Insbesondere kann in einer Basisstation oder in allen Basisstationen eines Systems eine Signalfolge K(i) abgespeichert sein, die in festen oder variablen Abständen zu Synchronisationszwecken ausgesendet wird. In der Mobilstation MS ist das Signalteilfolgenpaar (K1(j);K2(k)), aus dem die in der Basisstation abgespeicherte Signalfolge K(i) bildbar ist oder gebildet werden kann, abgespeichert und wird zur Synchronisation der Mobilstation mit einer Basisstation zur rechenaufwandsgünstigen Korrelationssummenberechnung herangezogen.

Die Speicherung der Signalfolgen bzw. der Signalteilfolgen kann auch durch eine Speicherung entsprechender Informationen in beliebig codierter Form erfolgen und durch Mittel zur Speicherung, wie beispielsweise flüchtige und/oder nichtflüchtige Speichereinbausteine oder durch entsprechend konfigurierte Addierer- oder Multiplizierereingänge oder entsprechende gleichwirkende Hardwareausgestaltungen realisiert sein.

Der Hochfrequenzteil HF besteht ggf. aus der Sendeeinrichtung SE, mit einem Modulator und einem Verstärker V und einer Empfangseinrichtung EE mit einem Demodulator und ebenfalls einem Verstärker. Durch Analog/Digitalwandlung werden die analogen Audiosignale und die analogen von der Empfangseinrichtung EE stammenden Signale in digitale Signale gewandelt und vom digitalen Signalprozessor DSP verarbeitet. Nach der Verarbeitung werden ggf. die digitalen Signale durch Digital/Analogwandlung in analoge Audiosignale oder andere Ausgangssignale und analoge der Sendeeinrichtung SE zuzuführende Signale gewandelt. Dazu wird gegebenenfalls eine Modulation bzw. Demodulation durchgeführt.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszillators VCO kann auch der Systemtakt zur Taktung von Prozessoreinrichtungen der Funkstation erzeugt werden.

Zum Empfang und zum Senden von Signalen über die Luftschnittstelle eines Mobilfunksystems ist eine Antenneneinrichtung ANT vorgesehen. Bei einigen bekannten Mobilfunksystemen, wie dem GSM (Global System for Mobile Communication) werden die Signale zeitlich gepulst in sogenannten bursts empfangen und gesendet.

Bei der Funkstation kann es sich auch um eine Basisstation BS handeln. In diesem Fall wird das Lautsprecherelement und das Mikrophonelement der Bedieneinheit MMI durch eine Verbindung zu einem Mobilfunknetz, beispielsweise über einen Basisstationscontroler BSC bzw. eine Vermittlungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtung.

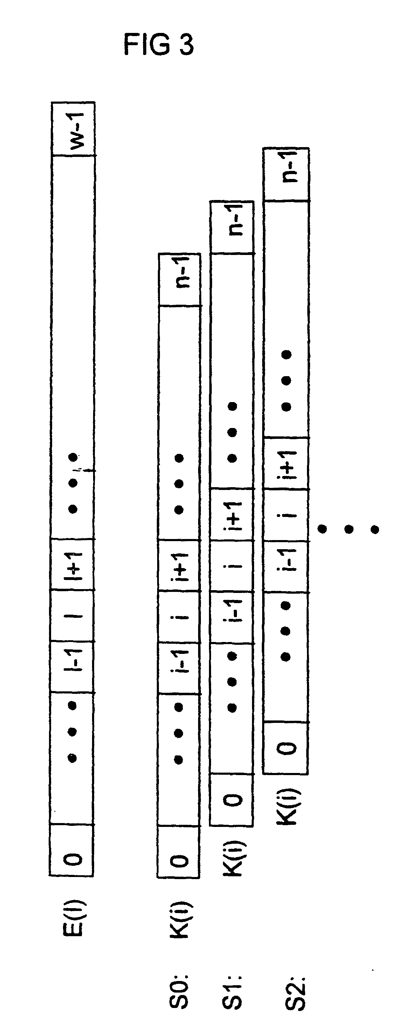

In Figur 3 ist eine Empfangssignalfolge E(l), bei der es sich auch um ein von einem Empfangssignal abgeleitete Signalfolge handeln kann, der Länge w dargestellt. Zur Berechnung einer ersten Korrelationssumme S0 entsprechend eingangs angegebener Formel werden Elemente eines ersten Abschnitts dieser Empfangssignalfolge E(l) paarweise mit den entsprechenden Elementen der Signalfolge K(i) der Länge n multipliziert, und die Länge der resultierenden Teilergebnisse zur Korrelationssumme S0 aufaddiert.

Zur Berechnung einer weiteren Korrelationssumme S1 wird die Signalfolge K(i) wie in der Figur bildlich dargestellt um ein Element nach rechts verschoben und die Elemente der Signalfolge K(i) mit den entsprechenden Elementen der Signalfolge E(l) paarweise multipliziert, und durch eine Summation der entstehenden Teilergebnisse wieder die Korrelationssumme S1 gebildet.

Die paarweise Multiplikation der Elemente der Signalfolge mit entsprechenden Elementen der Empfangssignalfolge und die anschließende Summation kann auch in Vektorschreibweise als die Bildung eines Skalarproduktes beschrieben werden, sofern man jeweils die Elemente der Signalfolge und die Elemente der Empfangssignalfolge zu einem Vektor eines kartesischen Koordinatensystems zusammenfaßt:

$$S0 = \begin{pmatrix} K(0) \\ \vdots \\ K(i) \\ \vdots \\ K(n-1) \end{pmatrix} * \begin{pmatrix} E(0) \\ \vdots \\ E(i) \\ \vdots \\ E(n-1) \end{pmatrix} = K(0) * E(0) + \ldots + K(i) * E(i) + \ldots + K(n-1) * E(n-1)$$

$$S1 = \begin{pmatrix} K(0) \\ \vdots \\ K(i) \\ \vdots \\ K(n-1) \end{pmatrix} * \begin{pmatrix} E(1) \\ \vdots \\ E(i+1) \\ \vdots \\ E(n) \end{pmatrix} = K(0) * E(1) + ... + K(i) * E(i+1) + ... + K(n-1) * E(n)$$

In den so ermittelten Korrelationssummen S kann das Maximum gesucht werden, das Maximum der Korrelationssummen S mit einem vorgegebenen Schwellwert verglichen werden, und so ermittelt werden, ob in dem Empfangssignal E(l) die vorgegebene Signalfolge K(i) enthalten ist, und wenn ja, wo im Empfangssignal E(l) sie sich befindet, und so zwei Funkstationen miteinander synchronisiert werden bzw. Daten, denen ein individueller Spreizcode in Form einer Signalfolge K(i) aufmoduliert wurde, detektiert werden.

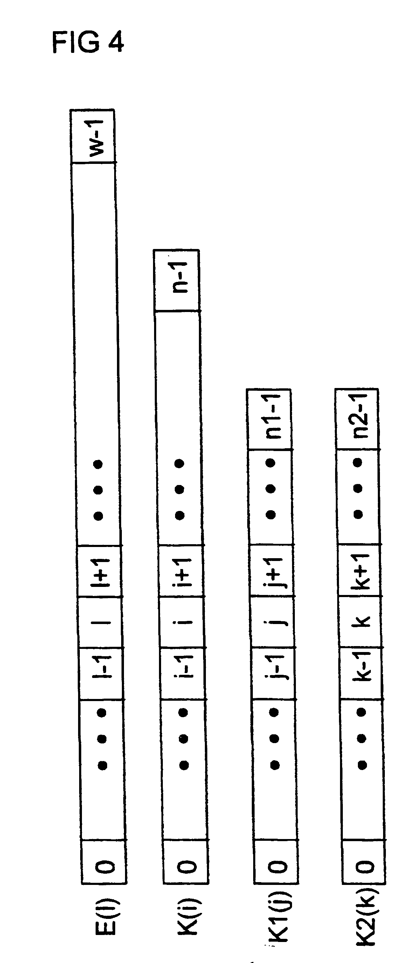

In Figur 4 ist wieder die Empfangssignalfolge E(l)und als Korrelationsfolge eine Signalfolge K(i), die auf den Signalteilfolgen K1(j), K2(k) basiert, dargestellt.

In Figur 5 ist die Bildung einer Signalfolge K(i) dargestellt, die auf zwei Signalteilfolgen K2(k) der Länge n2 und K1(j) der Länge n1 basiert. Dazu wird die Signalteilfolge K2(k) n1 mal wiederholt, und dabei durch die Signalteilfolge K1(j) moduliert. Die Bildung der Signalfolge K(i) läßt sich mathematisch auch durch folgende Formel ausdrücken:

K(i) = K2(i mod n2) * K1(i div n2), für i =0 ...n1*n2-1

Dies entspricht für den Fall n1 = n2 folgender Beziehung:

K(i) = K2(i mod n1) * K1(i div n2).

Dabei bezeichnet mod den ganzzahligen Rest einer Division und div das ganzzahlige Ergebnis einer Division.

Dies ist bildlich dargestellt durch eine Folge f2, die aus den wiederholten, nacheinander abgebildeten Signalteilfolgen K2(k) besteht, und eine Folge f1, die durch eine gedehnte Signalteilfolge K1(j) über der Folge f2 abgebildet ist.

Durch eine Multiplikation der Elemente der Folge f2 mit den entsprechenden über der Folge f2 abgebildeten Elementen der Folge f1 entsteht die neue Signalfolge K(i) der Länge n. Diese Erzeugung einer Signalfolge K(i) ist unten im Bild noch einmal anhand eines Beispiels zweier binärer Signalteilfolgen der Länge 4 dargestellt.

Natürlich ist die Erfindung nicht auf Signalteilfolgen der Länge 4 bzw. Signalfolgen der Länge 16 beschränkt. Auch ist die Erfindung nicht auf die oben verwendete mathematische Beschreibung beschränkt.

Beispielsweise entspricht inhaltlich folgende Darstellung für Signalteilfolgen der Länge 16 bzw. Signalfolgen der Länge 256 der oben verwendeten mathematischen Darstellung und ist daher ebenfalls in der Erfindung enthalten:

a ist eine Signalteilfolge der Länge 16
a = <x1, x2, ..., x16>;

die Signalfolge y der Länge 256 wird generiert durch die 16 fache Wiederholung der Signalteilfolge a, wobei a durch eine zweite Signalteilfolge der Länge 16 moduliert wird:

y = <a, a, a, a̲, a̲, a, a̲, a̲, a, a, a, a̲, a, a̲, a, a>, wobei durch den doppelten Unterstrich die zweite Signalteilfolge und die Modulation durch die zweite Signalteilfolge angezeigt wird.

Die so gebildete Signalfolge der Länge 256 kann beispielsweise zu Synchronisationszwecken als primärer Synchronisationscode cp der Länge 256 ausgesendet werden.

Derart gebildete Signalfolgen K(i) können zur vereinfachten Berechnung von Korrelationssummen dieser Signalfolgen K(i) mit Empfangssignalfolgen E(l) genutzt werden.

Eine schematische Darstellung einer derartigen vereinfachten und somit auch schnelleren und aufwandgünstigeren Berechnung von Korrelationssummen S ist in den Figuren 6 bis 8 dargestellt, auf die im folgenden eingegangen wird.

Zunächst wird eine Teilkorrelationssumme TS(z) gebildet. Dazu wird beispielsweise für das erste Element der Teilkorrelationssummenfolge TS(0) die Korrelationssumme der zweiten Signalteilfolge K2(k) mit dem entsprechenden Abschnitt der Empfangssignalfolge E(l) gebildet.

$$TS(0) = \begin{pmatrix} K2(0) \\ \vdots \\ K2(k) \\ \vdots \\ K2(n2-1) \end{pmatrix} * \begin{pmatrix} E(0) \\ \vdots \\ E(k) \\ \vdots \\ E(n2-1) \end{pmatrix} = K2(0) * E(0) + \ldots + K2(k) * E(k) + \ldots + K2(n2-1) * E(n2-1)$$

Für das zweite Element der Teilkorrelationssummenfolge TS(1) wird die zweite Signalteilfolge K2(k) wie bildlich dargestellt um ein Element verschoben und ebenfalls die Korrelationssumme mit dem entsprechenden Element der Empfangssignalfolge E(l) gebildet usw.

$$TS(1) = \begin{pmatrix} K2(0) \\ \vdots \\ K2(k) \\ \vdots \\ K2(n2-1) \end{pmatrix} * \begin{pmatrix} E(1) \\ \vdots \\ E(k+1) \\ \vdots \\ E(n2) \end{pmatrix} = K2(0) * E(1) + \ldots + K2(k) * E(k+1) + \ldots + K2(n2-1) * E(n2)$$

Das n-te Element der Teilkorrelationssummenfolge TS(n1*n2-1) wird nach n-1 Verschiebungen der zweiten Signalteilfolge K2(k) gegenüber der Empfangssignalfolge E(l) entsprechend berechnet.

$$TS(n-1) = \begin{pmatrix} K2(0) \\ \vdots \\ K2(k) \\ \vdots \\ K2(n2-1) \end{pmatrix} * \begin{pmatrix} E(n-1) \\ \vdots \\ E(k+n-1) \\ \vdots \\ E(n2+n-2) \end{pmatrix} =$$

$$= K2(0) * E(n-1) + \ldots + K2(k) * E(k+n-1) + \ldots + K2(n2-1) * E(n2+n-2)$$

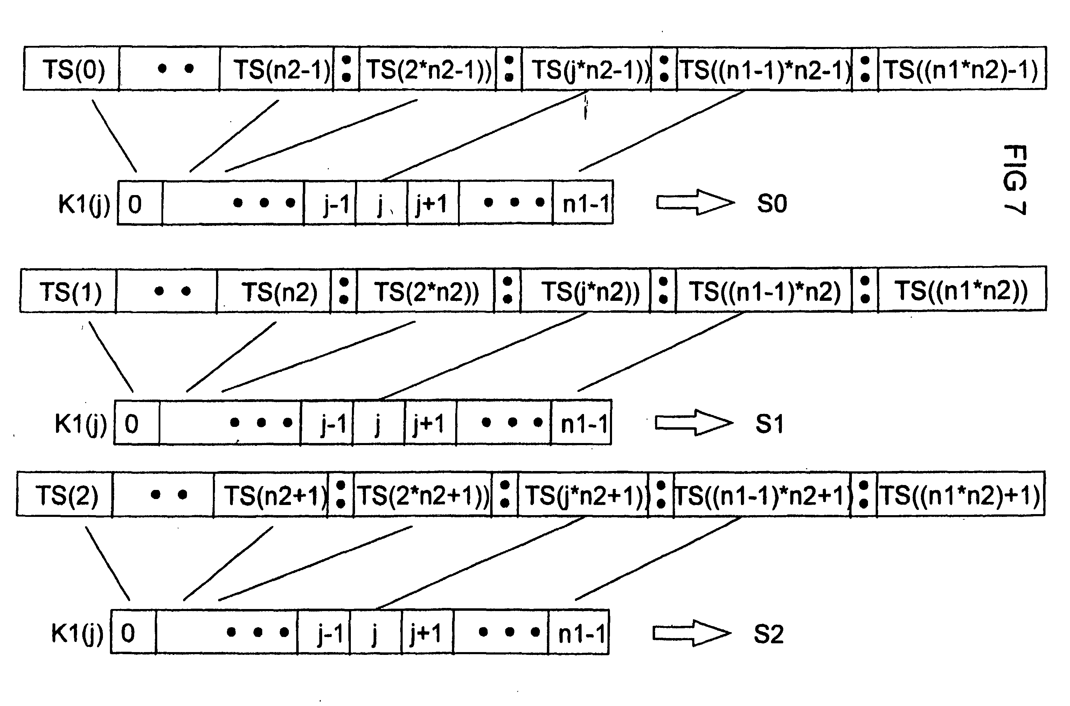

Die so entstehende Teilkorrelationssummenfolge TS(z) ist im oberen Bereich der Figur 7 dargestellt. Aus dieser Teilkorrelationssummenfolge wird nun jedes n2-te-Element ausgewählt und mit dem entsprechenden Element der ersten Signalteilfolge K1(j) paarweise multipliziert.

Faßt man die ausgewählten Elemente der Teilkorrelationssummenfolge TS(z) und die erste Signalteilfolge K1(j) jeweils zu Vektoren zusammen, so wird die erste Korrelationssumme S0 durch das Skalarprodukt dieser beiden Vektoren erzeugt.

$$S0 = \begin{pmatrix} K1(0) \\ \vdots \\ K1(j) \\ \vdots \\ K1(n1-1) \end{pmatrix} * \begin{pmatrix} TS(0) \\ \vdots \\ TS(j*n2-1) \\ \vdots \\ TS((n1-1)*n2-1) \end{pmatrix} = K1(0)*TS(0)+...+K1(j)*TS(j*n2-1)+...$$

Figur 7 zeigt im unteren Bereich die entsprechende Berechnung weiterer Korrelationssummen S1 bzw. S2 durch die Auswahl n2-ter um 1 bzw. 2 rechts von den als erstes ausgewählten Elementen liegenden Elemente:

$$S1 = \begin{pmatrix} K1(0) \\ \vdots \\ K1(j) \\ \vdots \\ K1(n1-1) \end{pmatrix} * \begin{pmatrix} TS(1) \\ \vdots \\ TS(j*n2) \\ \vdots \\ TS((n1-1)*n2) \end{pmatrix} = K1(0)*TS(0)+...+K1(j)*TS(j*n2)+...$$

Durch die Speicherung einmal berechneter Teilkorrelationssummen TS kann auf diese bei der späteren Berechnung von weiteren Korrelationssummen zurückgegriffen werden, und somit auf die entsprechenden Rechenschritte verzichtet werden.

Je nach Ausführungsvariante kann entweder zunächst die komplette Teilkorrelationssummenfolge TS(z) über die ganze Empfangssignalfolge E(l) berechnet werden und dann die einzelnen Korrelationssummen oder erst bei Bedarf zur Berechnung einer neuen Korrelationssumme die entsprechenden zusätzlich benötigten Teilkorrelationssummen berechnet werden.

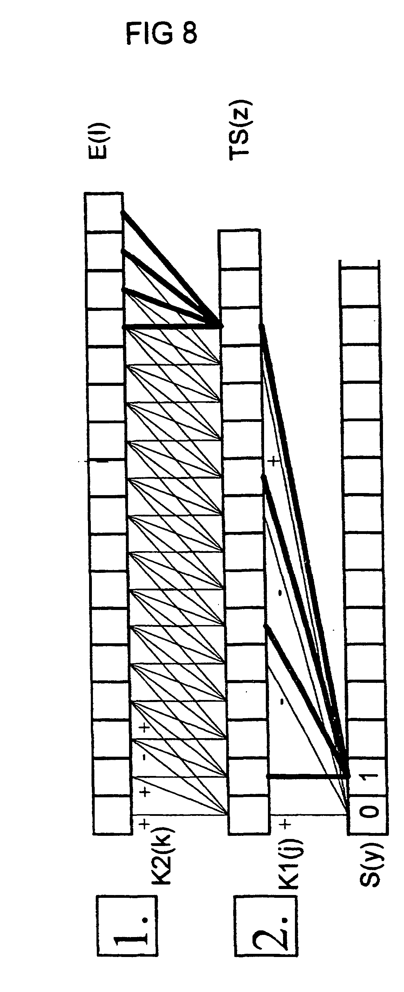

Figur 8 zeigt nochmals das aus zwei Schritten bestehende Verfahren zur Berechnung von Korrelationssummen S, diesmal anhand des in Figur 5 dargestellten Beispiels zweier binärer Signalteilfolgen der Länge 4.

In einem ersten Schritt werden die Teilkorrelationssummen TS(z) der zweiten Signalteilfolge K2(k) ++-+ mit entsprechenden Abschnitten der Empfangssignalfolge E(l) berechnet, und dann in einem zweiten Schritt jedes vierte Element der so erzeugten Teilkorrelationssummenfolge TS(z) ausgewählt, mit dem entsprechenden Element der ersten Signalteilfolge K1(j) +--+ multipliziert und zur Korrelationsfolge S0 aufsummiert.

Die dick gezeichneten Linien stellen dabei die neu durchzuführenden Berechnungsschritte dar für die Berechnung einer weiteren Korrelationssumme S1, für den Fall, daß die übrigen Teilkorrelationssummen TS schon zuvor berechnet und abgespeichert wurden.

Diese Ausführungsvariante kann möglichst speichereffizient durchgeführt werden, wenn zunächst jede n2-te Teilkorrelationssumme berechnet wird. Dazu werden die Abtastwerte zwischengespeichert.

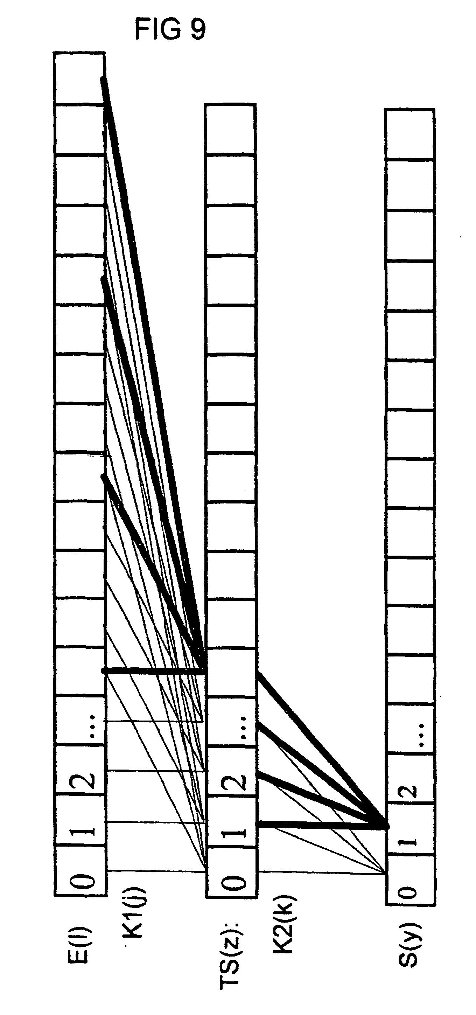

Die Figuren 9 bis 10 stellen eine andere Ausführungsvariante zur vereinfachten Berechnung von Korrelationssummen S anhand des schon oben erwähnten Beispiels zweier binärer Signalteilfolgen der Länge 4 vor.

Dabei wird zunächst jedes 4. Element der Empfangssignalfolge E(l) ausgewählt und die Teilkorrelationssummenfolge TS(z) der so ausgewählten Elemente mit der Signalteilfolge K1 (j) gebildet. Aus der so entstehenden Teilkorrelationssummenfolge TS(z) werden jeweils 4 aufeinander folgende Elemente ausgewählt, paarweise mit entsprechenden Elementen der Signalteilfolge K2(k) multipliziert und die resultierenden Teilergebnisse zur Korrelationssumme S aufsummiert. Dabei stellen wieder die dick gezeichneten Linien die zusätzlich nötigen Schritte zur Berechnung einer weiteren Korrelationssumme S1 dar, für den Fall, daß die anderen Teilkorrelationssummen TS zuvor schon berechnet und abgespeichert wurden.

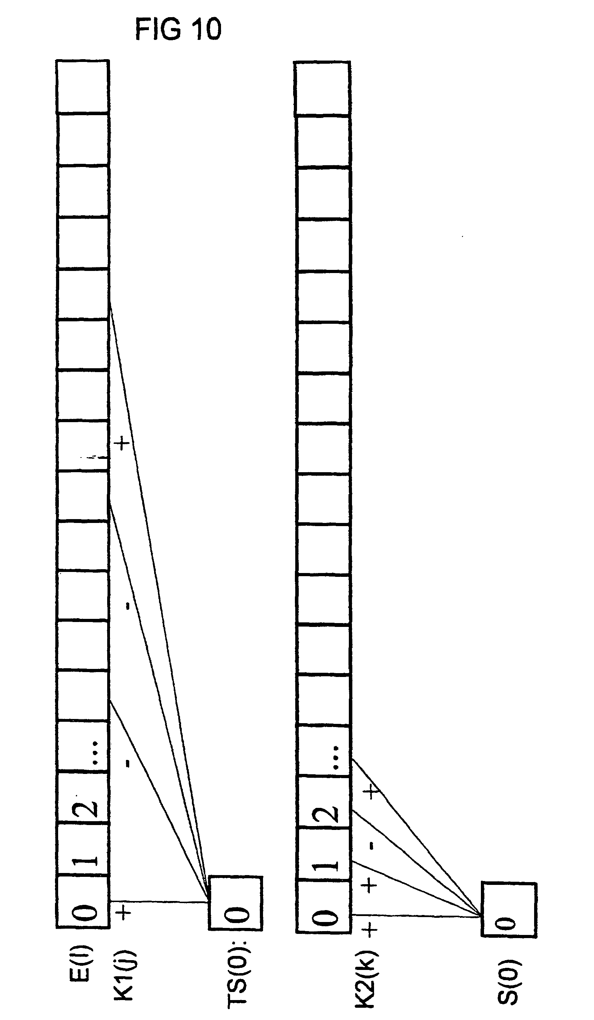

Figur 10 zeigt nochmals die Berechnung einer ersten Korrelationssumme S0 bei der zunächst jedes 4. Element der Empfangssignalfolge E(l) ausgewählt wird, diese Elemente mit entsprechenden Elementen der ersten Signalteilfolge K1(j) +--+ multipliziert werden und durch Summation der Teilergebnisse die Teilkorrelationssumme TS(0) berechnet wird. In einem zweiten Schritt werden die ersten vier aufeinander folgenden Elemente der Teilkorrelationssummenfolge TS(z) mit den entsprechenden Elementen der zweiten Signalteilfolge K2(k) ++-+ multipliziert und die entstehenden Teilergebnisse zur Korrelationssumme S0 aufsummiert.

Bei dieser Ausführungsvariante wird weniger Speicher zum Zwischenspeichern der Teilkorrelationssummen benötigt, wenn die Summen sukzessive berechnet werden.

Bei einer bevorzugten Ausführungsvariante der Erfindung werden als Signalteilfolgen Barker-Folgen verwendet, da diese, bezogen auf die Länge, die bestmöglichen Autokorrelationseigenschaften bieten. Für die o.g. Verfahren eignet sich insbesondere die Verwendung einer Signalfolge der Länge 169, die durch zwei Barker-Signalteilfolgen der Länge 13 gebildet werden. Eine solche Folge kann insbesondere in einem UMTS-Mobilfunksystem vorteilhaft eingesetzt werden.

Je nach Ausführungsvariante können die Elemente der Signalteilfolgen Werte auf dem Einheitskreis, beliebige reelle Werte oder beliebige komplexe Werte annehmen.

Ferner sieht eine weitere Ausgestaltung der Erfindung vor, zwei Signalteilfolgen gleicher Länge zu verwenden. Es ist auch möglich für die beiden Signalteilfolgen die gleiche Folge zu verwenden. Auch kann es vorteilhaft sein, als zweite Signalteilfolge die gespiegelte erste Signalteilfolge zu verwenden: K1(j) = K2(n1-j).

Es ist auch möglich eine verkürzte Signalfolge mit weniger als n1 * n2 Werten zu verwenden. Zur Berechnung der Korrelationssummen wird in diesem Fall das letzte Element der Teilkorrelationssummenfolge (zur Berechnung einer neuen Korrelationssumme) zunächst verkürzt berechnet und dann (um die für die folgenden Korrelationssummen benötigte Teilkorrelationssummenfolge zu berechnen) komplett berechnet. Dies erlaubt die Generierung von Siganlfolgen beliebiger Länge.

In oben eingeführter Nomenklatur wird also eine verkürzte Signalfolge Ks(i) verwendet, deren Länge ns kleiner ist als n1*n2. Es sei ns = n1*n2 - delta. n1 läßt sich so wählen, daß gilt delta < n2.

Die Berechnung wird analog zum bereits geschilderten Verfahren durchgeführt, nur daß zusätzlich verkürzte Teilkorrelationsfolgen TSs berechnet werden, deren Länge ebenfalls um delta kürzer als n2 ist.

$$TSs(n-1) = \begin{pmatrix} K2(0) \\ \vdots \\ K2(k) \\ \vdots \\ K2(n2-1-delta) \end{pmatrix} * \begin{pmatrix} E(n-1) \\ \vdots \\ E(k+n-1) \\ \vdots \\ E(n2+n-2-delta) \end{pmatrix} =$$

$$= K2(0) * E(n-1) + ... + K2(k) * E(k+n-1) + ... + K2(n2-1-delta) * E(n2+n-2-delta)$$

Die (verkürzte) erste Korrelationssumme S0 kann dann berechnet werden, wobei im Gegensatz zum oben beschriebenen Verfahren für den letzten Term die verkürzte Teilkorrelationssumme verwendet wird.

$$S0 = K1(0)*TS(0)+...+K1(j)*TS(j*n2 - 1)+...+K1(n1 - 1)*TSs((n1 - 1)*n2 -1)$$

Vorteilhafterweise wird die später benötigte nicht verkürzte Teilkorrelationssumme TS(i) unter Verwendung der gespeicherten Teilkorrelationsfolge TSs(i) berechnet.

Es ist auch möglich eine verlängerte Signalfolge, also mit mehr als n1 * n2 Werten zu verwenden. Zur Berechnung der Korrelationssummen wird in diesem Fall der erste Teil (n1*n2 Terme) nach obigem Verfahren berechnet, und außerdem zusätzliche Terme hinzugenommen. Die Korrelationsfolge K1(i) enthält dazu eine erfindungsgemäße Korrelationsfolge K(i), die jedoch um zusätzliche Elemente verlängert ist. Auch dieses Verfahren erlaubt die Generierung von Folgen beliebiger Länge.

In oben eingeführter Nomenklatur wird also eine verlängerte Korrelationsfolge K1(i) verwendet, deren Länge nl größer ist als n1*n2. Es gilt Kl(i)= K(i) für 0<= i <= n1*n2-1.

Die Berechnung wird analog zum bereits geschilderten Verfahren durchgeführt, nur daß außerdem die zusätzlichen Terme nach einem beliebigen Verfahren, entweder konventionell oder ebenfalls erfindungsgemäß, berechnet werden.

$$S0 = K1(0) * TS(0)+...+K1(j)*TS(j*n2 - 1)+...+K1(n1 - 1) * TS((n1 - 1) * n2 - 1) +$$

$$+ Kl(n1) * E((n1 -1) * n2)+...+Kl(nl) * E(nl)$$

**EP 1 112 633 B1**

In einer weiteren Variante des zuletzt aufgeführten Ausführungsbeispiels werden zusätzliche Werte am Anfang und/oder zwischen den (modulierten) Wiederholungen der Signalteilfolge K2 eingefügt. Die nicht eingefügten Elemente werden dann gemäß einem oben stehenden Verfahren weiterverarbeitet, die eingefügten Elemente entweder konventionell oder ebenfalls nach einem erfindungsgemäßen Verfahren.

Eine andere Weiterbildung der Erfindung sieht vor mehr als zwei Signalteilfolgen zu verwenden, wobei eine Signalteilfolge selbst aus Signalteilfolgen besteht.

Eine weitere Ausgestaltung der Erfindung macht von der durch das regelmäßige Konstruktionsprinzip der Signalfolge K(i) bedingten regelmäßigen (fast periodischen) Struktur der aperiodischen Autokorrelationsfunktion dieser Signalfolge Gebrauch. Dies bedeutet, daß sich bei der Suche eines Signals nicht nur ein Haupt-Maximum ergibt, sondern in regelmäßigen Abständen auch Nebenmaxima auftreten. Zur beschleunigten Suche nach der Signalfolge in der Empfangssignalfolge kann man die Regelmäßigkeit der Lage der Maxima ausnutzen. Sobald ein Nebenmaxima gefunden wurde, kann man aufgrund der Periodizität die Lage der anderen Maxima vorhersagen, d.h. man berechnet die Korrelationssumme lediglich an diesen Stellen. Auf diese Weise kann man schnell das Hauptmaximum detektieren. Allerdings kann es sich bei dem vermeintlichen Nebenmaximum auch nur um einen zufällig (wegen des Rauschanteils) erhöhten Wert handeln. In diesem Fall wird man an den potentiellen Stellen des erwarteten Hauptmaximums tatsächlich kein Maximum finden. Daher wird in diesem Fall die Hypothese verworfen und die Berechnung konventionell fortgesetzt.

Man kann die durch das Konstruktionsprinzip der Signalfolgen bedingte Regelmäßigkeit der Nebenmaxima aber auch zur Eliminierung und Korrektur störender Nebenmaxima im Korrelationsergebnis ausnutzen. Nach der Detektion des Maximums kann man aus dem Maximum die Nebenmaxima berechnen und diesen Wert von den entsprechenden Korrelationsergebnissen subtrahieren. Auf diese Weise erhält man das Korrelationsergebnis einer (hypothetischen) Folge mit perfekter Autokorrelationsfunktion. Dadurch ergibt sich durch die Regelmäßigkeit der Nebenmaxima eine stark vereinfachte Berechnung.

Die Erfindung ist nicht auf Funkübertragungssysteme beschränkt, sondern kann auch bei Verwendung anderer Übertragungsverfahren z.B. akustischer Verfahren (Ultraschall), insbesondere zu Zwecken der Sonographie, oder optischer Verfahren, beispielsweise die Infrarotmessung nach Lidar-Prinzipien eingesetzt werden. Ein weiteres Anwendungsgebiet ist die Untersuchung von Änderungen der spektralen Zusammensetzung von rückgestreuten Signalen.

Die Bildung von Signalfolgen, ihre Übertragung, sowie die Berechnung von Korrelationssummen dieser Signalfolgen mit empfangenen Signalfolgen kann zum Zwecke der Synchronisation zweier Übertragungseinheiten, wie beispielsweise Funkstationen Anwendung finden, insbesondere die Verwendung dieser Folgen im Synchronisationskanal in CDMA-Mobilfunksystemen, wie das sich in der Standardisierung befindliche UMTS-System.

**Patentansprüche**

1. Verfahren zur Synchronisation zwischen einer Basisstation (BS) und einer Mobilstation (MS),

   - bei dem die Basisstation eine Signalfolge K(i) der Länge n aussendet, die dadurch bildbar ist, dass
   - eine zweite Signalteilfolge K2(k) der Länge n2 n1 mal wiederholt wird und dabei durch eine erste Signalteilfolge K1(j) der Länge n1 moduliert wird,
   - bei dem n1 gleich n2 ist, und
   - bei dem diese Signalfolge K(i) in einer Mobilstation ermittelt wird.

2. Verfahren nach Anspruch 1, bei dem
   n gleich 256 ist, n1 gleich 16 ist und n2 gleich 16 ist.

3. Verfahren nach einem der vorstehenden Ansprüche, bei dem
   die Bildung der Signalfolge K(i) durch Modulation der zweiten Signalteilfolgen K2(k) nach folgender Vorschrift erfolgt: K(i) = K2(i mod n2) * K1(i div n2).

4. Verfahren nach einem der vorstehenden Ansprüche, bei dem

   - in der Mobilstation (MS) zur Ermittlung der Signalfolge K(i) Kenntnisse über die erste und zweite Signalteilfolge K1(j) K2(k) herangezogen werden.

5. Verfahren nach Anspruch 4,

- bei dem die in einer Empfangssignalfolge E(1) enthaltene vorgegebene Signalfolge K(i) in der Mobilstation (MS) durch die Bestimmung der Korrelationssummen S der Signalfolge K(i) mit entsprechenden Abschnitten der Empfangssignalfolge E(l) ermittelt wird, wobei
- eine Teilkorrelationssummenfolge TS(z) der Signalteilfolge K2(k) mit entsprechenden Teilen der Empfangssignalfolge E(l) berechnet wird, und
- zur Berechnung einer Korrelationssumme S n1 Elemente der Teilkorrelationssummenfolge TS(z) ausgewählt werden und im Sinne eines Skalarproduktes mit der Signalteilfolge K1(j) multipliziert werden.

6. Verfahren nach Anspruch 5, bei dem
zur Berechnung einer Korrelationssumme S n1 jeweils n2 te Elemente der Teilkorrelationssummenfolge TS(z) ausgewählt werden.

7. Verfahren nach Anspruch 4,

- bei dem die in einer Empfangssignalfolge E(l) enthaltene vorgegebene Signalfolge K(i) in der Mobilstation (MS) durch die Bestimmung der Korrelationssummen S der Signalfolge K(i) mit entsprechenden Abschnitten der Empfangssignalfolge E(l) ermittelt wird, wobei
- eine Teilkorrelationssummenfolge TS(z) der Signalteilfolge K1(j) mit ausgewählten Elementen der Empfangssignalfolge E(l) berechnet wird, und
- zur Berechnung einer Korrelationssumme S n2 Elemente der Teilkorrelationssummenfolge TS(z) im Sinne eines Skalarproduktes mit der Signalteilfolge K2(k) multipliziert werden.

8. Verfahren nach Anspruch 7, bei dem
zur Berechnung einer Teilkorrelationssumme TS n1 jeweils n2-te Elemente der Empfangssignalfolge E(l) ausgewählt werden.

9. Verfahren nach einem der Ansprüche 4 bis 8, bei dem
berechnete Teilkorrelationssummen TS in der Mobilstation (MS) abgespeichert werden und zur Berechnung einer weiteren Korrelationssumme S verwendet werden.

10. Basisstation (BS),
die derart eingerichtet ist, dass sie zur Synchronisation zwischen der Basisstation (BS) und einer Mobilstation (MS) eine Synchronisationsfolge aussendet, die dadurch erhältlich ist, daß

- eine zweite Signalteilfolge K2(k) der Länge n2 n1 mal wiederholt wird und dabei durch eine erste Signalteilfolge K1(j) der Länge n1 moduliert wird, wobei
- n1 gleich n2 ist.

11. Mobilstation (MS),
die derart eingerichtet ist, dass sie zur Synchronisation zwischen einer Basisstation (BS) und der Mobilstation (MS) eine Synchronisationsfolge verwendet, die dadurch erhältlich ist, dass

- eine zweite Signalteilfolge K2(k) der Länge n2 n1 mal wiederholt wird und dabei durch eine erste Signalteilfolge K1(j) der Länge n1 moduliert wird, wobei
- n1 gleich n2 ist.


**Claims**

1. Method for synchronization between a base station (BS) and a mobile station (MS),

- in which the base station transmits a signal sequence K(i) of length n which can be formed by
- repeating a second signal sequence element K2(k) of length n2 n1-times and, in the process, modulating it with a first signal sequence element K1(j) of length n1,
- in which n1 is equal to n2, and
- in which this signal sequence K(i) is determined in a mobile station.

2. Method according to Claim 1, in which

n is equal to 256, n1 is equal to 16 and n2 is equal to 16.

3. Method according to either of the preceding claims, in which
   the signal sequence K(i) is formed by modulation of the second signal sequence elements K2(k) in accordance
   with the following rule: K(i) = K2(i mod n2) * K1(i div n2).

4. Method according to one of the preceding claims, in which

   - knowledge about the first and second signal sequence elements K1(j) K2(k) is used in the mobile station (MS)
     for determining the signal sequence K(i).

5. Method according to Claim 4,

   - in which the predetermined signal sequence K(i) contained in a received signal sequence E(l) is determined
     in the mobile station by establishing the correlation sums S of the signal sequence K(i) with corresponding
     sections of the received signal sequence E(l), in which case
   - a partial correlation sum sequence TS(z) of the signal sequence element K2(k) is calculated using corresponding parts of the received signal sequence E(l), and
   - n1 elements of the partial correlation sum sequence TS(z) are selected in order to calculate a correlation sum
     S, and are multiplied by the signal sequence element K1(j) in the sense of a scalar product.

6. Method according to Claim 5, in which
   n1 in each case n2-th elements of the partial correlation sum sequence TS(z) are selected in order to calculate a
   correlation sum S.

7. Method according to Claim 4,

   - in which the predetermined signal sequence K(i) contained in a received signal sequence E(l) is determined
     in the mobile station (MS) by establishing the correlation sums S of the signal sequence K(i) with corresponding
     sections of the received signal sequence E(l), in which case
   - a partial correlation sum sequence TS(z) of the signal sequence element K1(j) is calculated using corresponding elements of the received signal sequence E(l), and
   - n2 elements of the partial correlation sum sequence TS(z) are multiplied by the signal sequence element K2
     (k), in the sense of a scalar product, in order to calculate a correlation sum S.

8. Method according to Claim 7, in which
   n1 in each case n2-th elements of the received signal sequence E(l) are selected in order to calculate a partial
   correlation sum TS.

9. Method according to any of Claims 4 to 8, in which calculated partial correlation sums TS are stored in the mobile
   station (MS) and are used in order to calculate a further correlation sum S.

10. Base station (BS),
    which is designed to transmit a synchronization sequence for synchronization between the base station (BS) and
    a mobile station (MS), which synchronization sequence can be obtained

    - by repeating a second signal sequence element K2(k) of length n2 n1 times, and in the process modulating
      it with a first signal sequence element K1(j) of length n1, where
    - n1 is equal to n2.

11. Mobile station (MS),
    which is designed to transmit a synchronization sequence for synchronization between a base station (BS) and
    the mobile station (MS), which synchronization sequence can be obtained

    - by repeating a second signal sequence element K2(k) of length n2 n1 times, and in the process modulating
      it with a first signal sequence element K1(j) of length n1, where
    - n1 is equal to n2.

**EP 1 112 633 B1**

**Revendications**

1. Procédé pour la synchronisation entre une station de base (BS) et une station mobile (MS),

    - dans lequel la station de base émet une séquence de signaux K(i) de la longueur n, qui peut être formée par le fait que
    - une seconde séquence partielle de signaux K2(k) de longueur n2 est répétée n1 fois et est alors modulée par une première séquence partielle de signaux K1(j) de longueur n1,
    - dans lequel n1 est égal à n2, et
    - dans lequel cette séquence de signaux K(i) est déterminée dans une station mobile.

2. Procédé selon la revendication 1, dans lequel n est égal à 256, n1 est égal à 16 et n2 est égal à 16.

3. Procédé selon l'une quelconque des revendications précédentes, dans lequel la formation de la séquence de signaux K(i) s'effectue par modulation des secondes séquences partielles de signaux K2(k) selon la prescription suivante :

$$K(i) = K2(i \bmod n2) * K1(i \operatorname{div} n2).$$

4. Procédé selon l'une quelconque des revendications précédentes, dans lequel

    - dans la station mobile (MS), on a recours à des connaissances sur la première et la seconde séquences partielles de signaux K1(j) K2(k) pour la détermination de la séquence de signaux K(i).

5. Procédé selon la revendication 4,

    - dans lequel la séquence de signaux K(i) prédéfinie et incluse dans une séquence de signaux de réception E (1) est déterminée dans la station mobile (MS) par la détermination des sommes de corrélation S de la séquence de signaux K(i) avec des parties appropriées de la séquence de signaux de réception E(1),
    - une séquence de sommes de corrélation partielle TS(z) de la séquence partielle de signaux K2(k) est calculée avec des parties correspondantes de la séquence de signaux de réception E(1), et
    - pour le calcul d'une somme de corrélation S, n1 éléments de la séquence de sommes de corrélation partielle TS(z) sont sélectionnés et sont multipliés par la séquence partielle de signaux K1(j) dans le sens d'un produit scalaire.

6. Procédé selon la revendication 5, dans lequel n1 à chaque fois n2-ième éléments de la séquence de sommes de corrélation partielle TS(z) sont sélectionnés pour le calcul d'une somme de corrélation S.

7. Procédé selon la revendication 4,

    - dans lequel la séquence de signaux K(i) prédéfinie et incluse dans une séquence de signaux de réception E (1) est déterminée dans la station mobile (MS) par la détermination de sommes de corrélation S de la séquence de signaux K(i) avec des parties correspondantes de la séquence de signaux de réception E(1),
    - une séquence de sommes de corrélation partielle TS(z) de la séquence partielle de signaux K1(j) est calculée avec des éléments sélectionnés de la séquence de signaux de réception E(1), et
    - n2 éléments de la séquence de sommes de corrélation partielle TS(z) sont multipliés par la séquence partielle de signaux K2(k) dans le sens d'un produit scalaire pour le calcul d'une somme de corrélation S.

8. Procédé selon la revendication 7, dans lequel n1 à chaque fois n2-ième éléments de la séquence de signaux de réception E(1) sont sélectionnés pour le calcul d'un somme de corrélation partielle TS.

9. Procédé selon l'une quelconque des revendications 4 à 8, dans lequel des sommes calculées de corrélation partielle TS sont mémorisées dans la station mobile (MS) et sont utilisées pour le calcul d'une autre somme de corrélation S.

10. Station de base (BS), qui est aménagée de telle sorte qu'elle émet pour la synchronisation entre la station de base (BS) et une station mobile (MS) une séquence de synchronisation qui peut être obtenue par le fait que

13

- une seconde séquence partielle de signaux K2(k) de longueur n2 est répétée n1 fois et est modulée alors par une première séquence partielle de signaux K1(j) de longueur n1,
- n1 est égal à n2.

11. Station mobile (MS), qui est aménagée de telle sorte qu'elle utilise pour la synchronisation entre une station de base (BS) et la station mobile (MS) une séquence de synchronisation qui peut être obtenue par le fait que

- une seconde séquence partielle de signaux K2(k) de longueur n2 est répétée n1 fois et est alors modulée par une première séquence partielle de signaux K1(j) de longueur n1,
- n1 est égal à n2.

FIG 1

EP 1 112 633 B1

FIG 2

MS

MMI

VE

DSP

SPE

MC    STE

SVE

VCO

SYN

HF

EE

SE

ANT

# FIG 3

## FIG 4

FIG 5

EP 1 112 633 B1

K1(j)

f1: | 0 | 1 | • • •

f2: | 0 | • • | k-1 | k | k+1 | • • | n2-1 | 0 | • • | k-1 | k | k+1 | • • | n2-1 |

f1*f2=

K2(k)     K2(k)

K(i): | 0 | • • • | i-1 | i | i+1 | • • • | n-1 |

| f1 | + | | | | - | | | | - | | | | + | | | |
| f2 | + | + | - | + | + | + | - | + | + | + | - | + | + | + | - | + |

| f1 * f2 | + | + | - | + | - | - | + | - | - | - | + | - | + | + | - | + |

## FIG 6

| E(l) | 0 | • • | l-1 | l | l+1 | • • • | n-1 | | | | | | | w-1 |
|------|---|------|-----|---|-----|-------|-----|---|---|---|---|---|---|-----|

TS(0): K2(k)

| 0 | • • | k-1 | k | k+1 | • • | n2-1 |
|---|-----|-----|---|-----|-----|------|

TS(1):     K2(k)

| 0 | • • | k-1 | k | k+1 | • • | n2-1 |
|---|-----|-----|---|-----|-----|------|

• • •

TS(n1*n2-1):     K2(k)

| 0 | • • | k-1 | k | k+1 | • • | n2-1 |
|---|-----|-----|---|-----|-----|------|

FIG 7

EP 1 112 633 B1

TS(0) | • • | TS(n2-1) | TS(2*n2-1)) | TS(j*n2-1)) | TS((n1-1)*n2-1) | TS((n1*n2)-1)

K1(j) | 0 | • • • | j-1 | j | j+1 | • • • | n1-1 ⇒ S0

TS(1) | • • | TS(n2) | TS(2*n2)) | TS(j*n2)) | TS((n1-1)*n2) | TS((n1*n2))

K1(j) | 0 | • • • | j-1 | j | j+1 | • • • | n1-1 ⇒ S1

TS(2) | • • | TS(n2+1) | TS(2*n2+1)) | TS(j*n2+1) | TS((n1-1)*n2+1 | TS((n1*n2)+1)

K1(j) | 0 | • • • | j-1 | j | j+1 | • • • | n1-1 ⇒ S2

# FIG 8

FIG 9

EP 1 112 633 B1

FIG 10

EP 1 112 633 B1